# EUROPEAN PATENT APPLICATION

(11) **EP 4 353 449 A1**
(43) Date of publication of application: **17.04.2024**
(21) Application number: 22201084.5
(22) Date of filing: 12.10.2022
(51) Int. Cl.: B29C 64/118, B33Y 10/00, B33Y 80/00

(54) **METHOD FOR MANUFACTURING OF A THERMALLY CONDUCTIVE ELECTRICAL COMPONENT**

(71) Applicant: ABB E-mobility B.V., 2629 JG Delft (NL)
(72) Inventor: RZEPECKI, Michal, 30-650 Kraków (PL); BANASZCZYK, Jedrzej, 32-020 Wieliczka (PL); RYBAK, Andrzej, 30-349 Kraków (PL); GRECKI, Filip, 5406 Rutihof (CH); BAHMANI, Amin, 5018 Erlinsbach (CH)
(74) Representative: Maiwald GmbH

(57) **Abstract**

The present invention relates to a method (100) for manufacturing of a thermally conductive electrical component (20) comprising:
- providing (101) a thermally conductive thermoplastic material (10);
- processing (102) the thermally conductive thermoplastic material (10) by applying an extrusion-based 3D printing process to the thermally conductive thermoplastic material (10), wherein the step of processing (102) includes setting a printing path (12) of the thermally conductive thermoplastic material (10) during the 3D printing process in such a way that a flow direction (13) of the thermally conductive thermoplastic material (10) corresponds to a preferred direction (14) of a heat flow of the thermally conductive electrical component (20).

## Description

### FIELD OF THE INVENTION

The present invention relates to a method for manufacturing of a thermally conductive electrical component.

### BACKGROUND OF THE INVENTION

It is well-known in prior art that pure thermoplastic materials have a low thermal conductivity. In order to enhance their thermal conductive properties, usually a filler material with high thermal conductivity, e.g. ceramic materials like silica (SiO2), alumina (Al2O3), boron nitride (BN), silicon carbide (SiC) or silicon nitride (Si3N4), is added to the thermoplastic material.

In the prior art, thermally conductive thermoplastic materials with electrically insulation properties are formed by using injection molding or thermoplastic extrusion method. Both methods are associated with a specific flow of material during the manufacturing process. In case of a thermally conductive thermoplastic, the highest thermal conductivity is obtained in the direction of material flow. However, this reduces the usability of such materials in many applications. The reason of such behavior is a forced orientation or direction of the filler material when using the method of injection molding. Additionally, the control of a orientation or direction of a filler material in thermoplastic material in desired orientation or direction is limited due to mold design constrains.

Hence, in state of the art, when using injection molding or a extrusion process for manufacturing or producing a thermoplastic material, its thermal conductivity is determined by a definite flow direction of the material that is determined by a mold geometry. There is limited possibility to change the material flow direction, e.g. by making changes in injection points, but it is not possible to achieve a good thermal conductivity through a plane of the thermoplastic material.

There is a need to address these issues.

### SUMMARY OF THE INVENTION

Therefore, it would be advantageous to provide an improved concept for manufacturing a thermally conductive electrical component.

The object of the present invention is solved with the subject matter of the independent claims, wherein further embodiments are incorporated in the dependent claims.

In a first aspect of the present invention, there is provided a method for manufacturing of a thermally conductive electrical component, the method comprising:
- providing a thermally conductive thermoplastic material;
- processing the thermally conductive thermoplastic material by applying an extrusion-based 3D printing process to the thermally conductive thermoplastic material,
- wherein the step of processing includes setting a printing path of the thermally conductive thermoplastic material during the 3D printing process in such a way that a flow direction of the thermally conductive thermoplastic material corresponds to a preferred direction of a heat flow of the thermally conductive electrical component.

In other words, an aspect of the present invention is that during a 3D printing process a printing path is set in such a way of the thermally conductive thermoplastic material that a flow direction of the thermally conductive thermoplastic material corresponds to a preferred direction of a heat flow of a thermally conductive electrical component that is manufactured. It should be noted that the thermally conductive electrical component can also be a thermally conductive electrical insulation component.

In this context, it is important for the understanding of the core idea of the present invention to note that the used term "corresponds to" is not restricted to a defintion that the flow direction of the thermally conductive thermoplastic material is always parallel to a preferred direction of a heat flow of the thermally conductive thermoplastic material.

The best thermal conductivity achieved in the thermoplastic material of the present invention is when the flow direction of the thermally conductive thermoplastic material is in the direction of the heat flow. When the flow direction of the thermally conductive thermoplastic material is perpendicular to the heat flow direction, but is parallel to a printed layer plane, the achieved heat or thermal conductivity is still good. The worst thermal conductivity is, when the heat flow direction is perpendicular to both a flow direction of the thermoplastic material and a layer plane.

In this way, an optimized heat conductive path or an optimized heat flow is generated that allows or facilitates a heat transport from an inside or an interior of a electrical component to its outside region of the electrical component in an efficient manner. This makes the cooling of the internal part of an electrical device having such an thermally conductive electrical component with an optimized heat flow more efficent.

The method of the present invention achieves the advantage to manufacture parts of thermoplastic material with a high thermal conductivity through a plane of the thermoplastic material.

A further advantage of the present invention is that better cooling possibilities for many electrical applications generating high thermal losses are achieved when the produced heat inside an electrical component during its operation can be transported to its outside in the manner as described before.

A further advantage of the present invention is a larger design freedom when printing a 3D structure, allowing to produce a 3D structure for a variety of different technical applications in a flexible way with an optimized heat flow enabling an easier and more flexible cooling of said 3D structure.

For example, the present invention can be applied for power transformers, where high loses are generated and electrical insulation properties of thermally conductive materials are essential. Additionally the present invention can be further applied for many high power electronic applications for electronic enclosures enabling an improved cooling of the whole device.

According to an example, the flow direction of the thermally conductive thermoplastic material extends in a radially-oriented direction. Therein, the advantage of an efficent heat transport resulting in an improved cooling possibility is achieved.

According to an example, the thermally conductive thermoplastic material comprises a filler material element that is oriented in the flow direction of the thermally conductive material. Therein, the advantage of improved thermal conductive properties oft he thermally conductive thermoplastic material are achieved.

According to an example, a direction of a largest dimension of the filler material element located inside of the thermoplastic material corresponds mainly to the flow direction of the thermally conductive thermoplastic material. Therein, the advantage of improved thermal conductive properties oft he thermally conductive thermoplastic material are achieved.

According to an example, the at least one filler material element comprises one of a plate,- needle-, or fiber-like shape. Therein, the advantage of improved and flexible thermal conductive properties of the thermally conductive thermoplastic material are achieved. Depending on the shape of the filler material element, properties of a heat transport resulting in improved cooling properties can be flexibly and easily adapted according to a desired application of the resulting thermoplastic material.

According to an example, the extrusion-based 3D printing process comprises a pellet extrusion 3D printing method or a fused deposition modelling method. The advantage achieved is a enhanced flexibility in 3D printing adapted to different technical applications.

In a second aspect of the present invention, an electrical component is provided that is processed according to the method of any preceding aspect. wherein the electrical component is configured as a thermally conductive bobbin.

In a third aspect of the present invention, an electrical component provided comprising a thermally conductive electric insulation.

In a forth aspect of the present invention, an electrical component provided, wherein the electrical component is a thermally conductive power electronic enclosure.

In a fifth aspect of the present invention, an electrical device is provided comprising the electrical component according to any preceding aspect.

In a sixth aspect of the present invention, a high power transformer is provided comprising at least one electrical component according to any preceeding aspect.

In a seventh aspect of the present invention, a 3D-printed structure is provided manufactured according to the method of the present invention, wherein the 3D-printed structure comprises at least a layer of a thermoplastic material with at least one filler material element according to the present invention.

### BRIEF DESCRIPTION OF THE DRAWINGS

Exemplary embodiments will be described in the following with reference to the following drawings:
Fig. 1 illustrates a schematic flow-diagramm of a method of the present invention;
Fig. 2 illustrates a schematic implementation of a thermoplastic material with a schematic heat and material flow direction of the present invention;
Fig. 3a illustrates a schematic heat and material flow direction in an electrical component known in the prior art;
Fig. 3b illustrates a schematic heat and material flow direction in an electrical component of the present invention;
Fig. 3c illustrates a schematic heat and material flow direction in an electrical component of the present invention;
Fig. 3d illustrates a schematic implementation of an electrical component of the present invention;
Fig. 4a illustrates a schematic heat and material flow direction in an electrical component known in the prior art;
Fig. 4b illustrates a schematic heat and material flow direction in an electrical component of the present invention;
Fig. 4c illustrates a schematic implementation of an electrical component of the present invention;
Fig. 5a illustrates a schematic heat and material flow direction in an electrical component known in the prior art; and
Fig. 5b illustrates a schematic heat and material flow direction in an electrical component of the present invention.

### DETAILED DESCRIPTION OF THE DRAWINGS

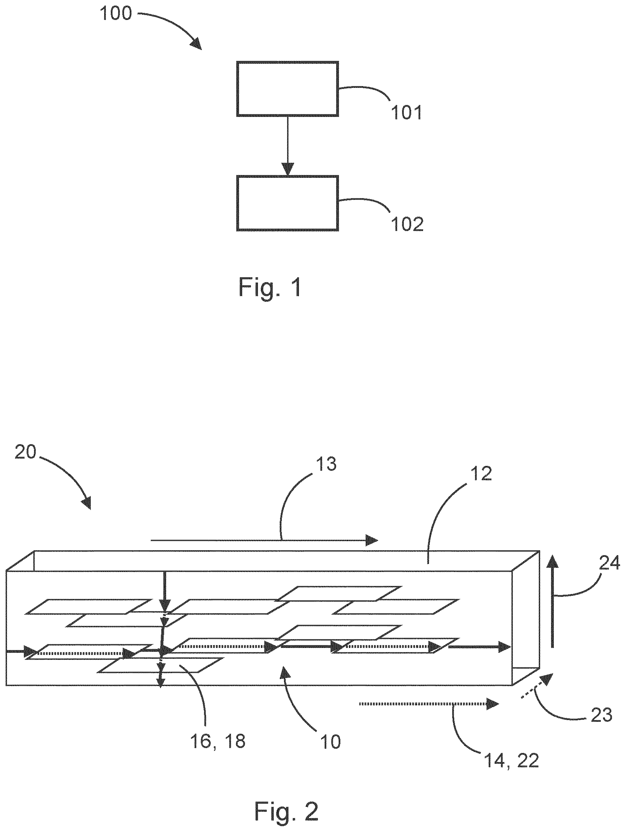

Fig. 1 illustrates a schematic flow-diagramm 100 of a method of the present invention.

In a first step 101, a thermally conductive thermoplastic material 10 is provided.

In a second step 102, the thermally conductive thermoplastic material 10 is processed by applying an extrusion-based 3D printing process to the thermally conductive thermoplastic material 10. The step of processing 102 includes setting a printing path 12 (see Fig. 2) of the thermally conductive thermoplastic material 10 during the 3D printing process in such a way that a flow direction 13 of the thermally conductive thermoplastic material 10 corresponds to a preferred direction 14 of a heat flow of the thermally conductive electrical component 20.

The extrusion-based 3D printing process may be a pellet extrusion 3D printing method or a fused deposition modelling method. But the extrusion-based 3D printing process is not restricted to these examples.

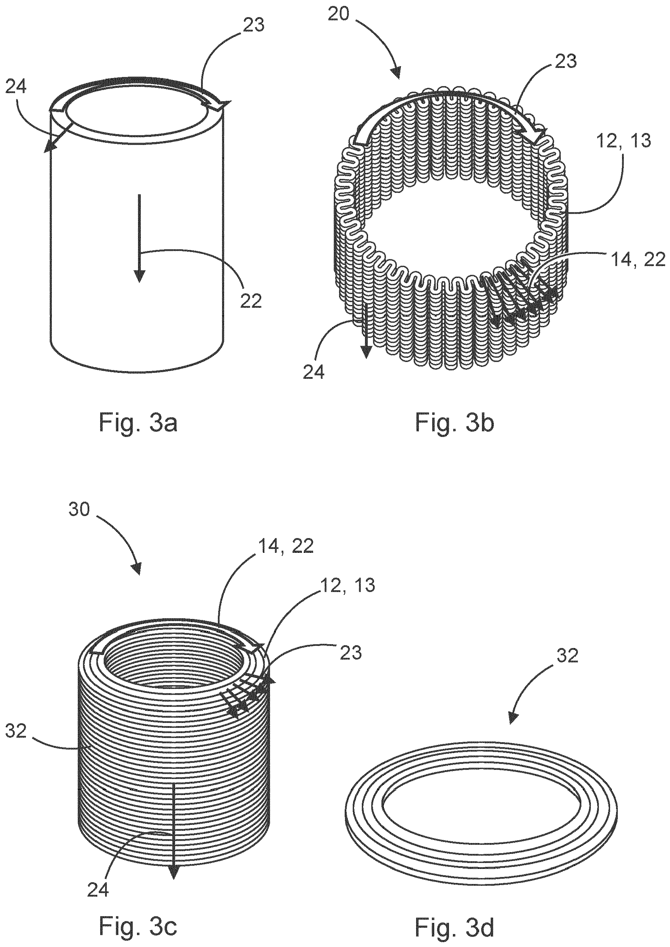

Fig. 2 illustrates a schematic implementation of a thermally conductive thermoplastic material 10 with a schematic heat and material flow direction of the present invention. Fig. 2 shows the printing path 12 in an embodiment of an electrical component 20. It should be further noted that the embodiment of Fig. 2 shows schematically the basic principle of the invention inside of a single layer in detail as it is depicted, e.g. in Fig. 3d,

In the embodiment as shown in Fig. 2, the printing path 12 of the thermally conductive thermoplastic material 10 is set in such a way that a flow direction 13 of the thermally conductive thermoplastic material 10 corresponds to a preferred direction 14 of a heat flow of the thermally conductive electrical component 20.

In this example, the term "corresponds to" means that the flow direction 13 of the thermally conductive thermoplastic material 10 is roughly in the same direction as the preferred heat flow direction 14 of the thermally conductive thermoplastic material 10. In this way, the heat will be effectivly transported along the prefered heat flow direction 14 in or inside of the thermoplastic material 10.

To be more general, the best thermal conductivity achieved in the manufactured thermoplastic material 10 of the present invention is when the flow direction 13 of the thermally conductive thermoplastic material is in the direction of the heat flow 14 (see direction of arrow 22 in Fig. 2).

When the flow direction 13 of the thermally conductive thermoplastic material 10 is perpendicular to a heat flow direction 14, but is parallel to a printed layer plane, the achieved heat or thermal conductivity is still good (see direction of arrow 23 in Fig. 2). The worst thermal conductivity (see direction of arrow 24 in Fig. 2) is, when the heat flow direction 14 is perpendicular to both a flow direction 13 of the thermoplastic material 10 and a layer plane. In Fig. 2, the layer plane is indicated by the plane of horizontal orientiation of the thermally conductive thermoplastic material 10.

Further, Fig. 2 indicates that the thermally conductive material 10 comprises a filler material element 16 that is oriented in the flow direction 13 of the thermally conductive material 10.

Fig. 2 also shows that a direction or orientation 18 of the largest dimension of the filler material element 16 located inside of said thermoplastic material 10 corresponds mainly to the flow direction 13 of the thermally conductive thermoplastic material 10.

In the shown embodiment of Fig. 2, the filler material element 16 has a plate-like shape. However, other, more suitable shapes, for example and not restricted to it, such as a needle- or fiber-like shape may be possible. What kind of shape of the filler material element 16 is used, depends mainly on the desired thermal conductive properties of the thermal conductive thermoplastic material.

Fig. 3a illustrates a schematic heat and material flow direction in an electrical component known in the prior art. The electrical component has a tube-like shape. The directions of the arrows indicate the following:
The direction of arrow 22 indicates the best thermal conductivity of the electrical component. This direction is equivalent to the extrusion direction for the electrical component. The direction of arrow 23 indicates a good thermal conductivity of the electrical component. The direction of arrow 24 indicates the worst thermal conductivity of the electrical component which is similar to the heat flow direction in that electrical component. Hence, a cooling of said electrical component is difficult to manage, as the heat flows through the material from the top to the bottom or ground of the electrical component.

Fig. 3b illustrates a schematic heat and material flow direction in an electrical component 20 of the present invention. The electrical component 20 that is embodied as tube that is printed, for example by a pellet extrusion method, achieves an improved radial thermal conductivity. According to Fig. 3b, the flow direction 13 and the (main) heat flow direction 14 of the thermally conductive thermoplastic material 10 (which is identical to the printing path 12) extends in a radially-oriented direction. In this way, a more efficient heat transport and cooling of electrical component 20 is ensured compared to the embodiment of the electrical component of Fig. 3a.

When comparing both embodiments of Fig. 3a and 3b, the differences can be clearly recognized when looking at the direction of arrows for bad thermal conducivity (arrow 24) and the direction of arrows 22 (Fig. 3a) and 14 (Fig. 3b) for the best thermal conducitivity of said electrical components. The embodiment of Fig. 3b further provides a larger surface for conducting the heat flow from its inside portion of the tube-like electrical component 20 to its outside or outer edge portion f the tube-like electrical component 20. The electrical component 20 comprises of multiple tubes in a snake- or curved-liked shape attached together or thermally and physically linked or connected together forming a circular shape that can be regarded as a kind of thermal-conductive layer or thermal-conductive layer elements. The electrical component 20 of Fig. 3b comprises a plurality of such thermal-conducitive layer elements that are arranged in a stack-like format from a top to a bottom of the electrical component 20.

Fig. 3c illustrates a schematic heat and material flow direction in a further electrical component 30 of the present invention. The electrical component 30 comprises a plurality of circular-shaped tubes or thermal-conductive layer elements 32 of a thermally conductive thermoplactic material 10 with at least a filler material element 16 (not directly visible in Fig. 3c) that are stacked in a horizontal direction from a top to a bottom of the electrical component 20. Each thermal-conductive layer element 32 in the horizontal plane direction of said layer element 32 is thermally and physically connected to at least a further circular-shaped tube with a smaller or a larger diameter in the horizontal plane orientation of said layer element 32 and extends radially from inside layer element 32 with the smallest diameter to an outside layer element 32 with the largest diameter (see also Fig. 3d). The printing path 12 is equivalent to the material flow direction 13 of the thermoplastic material 10. The direction of arrow 14 indicates the best thermal conductivity direction of this electrical component 30 - in this way, the heat is transported by each cirular-shaped tube according its circular-shape. The worst thermal conducivity indicated with arrow 24 is perpendicular to the (horizontal) orientation of the arrows of the best thermal conductivity or heat flow direction 14 and a good thermal conductivity 23. In case of the good thermal conduvitity property of the electrical component 30, the heat flow is transported or forwarded from the (innermost) circular-shaped tube with the smallest diameter to the (outmost) circular-shaped tube with the largest diameter.

Fig. 3d illustrates a schematic implementation of an electrical component 30 of the present invention and in particular said single thermally-conductive layer element 32 as used in the electrical component 30 of Fig. 3c.

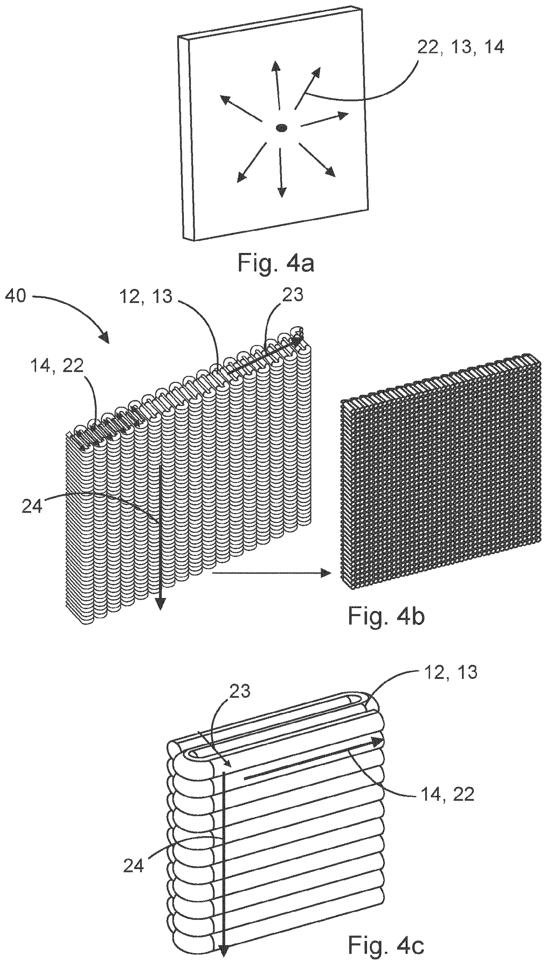

Fig. 4a illustrates a schematic heat and material flow direction in a rectangular-shaped electrical component known in the prior art. In this embodiment, the material flow direction 13, the heat flow direction 14 and the direction of the best thermal conductivity 22 coincidence and extend in a radial-oriented direction starting from the injection point (black dot).

Fig. 4b illustrates a schematic heat and material flow direction in an electrical component 40 of the present invention that is rectangular-shaped and is regarding thermal conductivity an improved embodiment of the electrical component of Fig. 4a. The Fig. 4b shows the direction of the heat flow 14 which is also the direction of the best thermal conductivity 22. The direction of the printing path 12 coincidenes with the material flow direction 13. The arrow 23 shows the direction of good thermal conductivity - in this way, the heat flows or is forwarded or transported through each snake-like tube element that is physically and thermally connected to at least another snake-like tube element (in a horizonatal direction). The electrical component 40 in Fig. 4b consists also of a stack of thermal-conductive layer elements (in a vertical direction of the electrical component 40), wherein each layer element is formed by a plurality of snake-like tubes elements arranged in a horiztonal direction (see also Fig. 4c). The arrow 24 indicating the direction for the worst thermal conductivtiy is perpendicular to the arrow 14, 22 indicating the best thermal conductivity direction.

Fig. 4c illustrates a schematic implementation of an electrical component 40 of the present invention. The embodiment shows in detail, that the direction 22 of the best thermal conductivity and the direction of the heat flow 13 is perpendicular to the direction 24 indicating the worst thermal conductivity. Also, the direction 23 indicating a good, but not the best thermal conductivity, is shown, wherein the heat flows in a horizontal plane through a snake-like tube element.

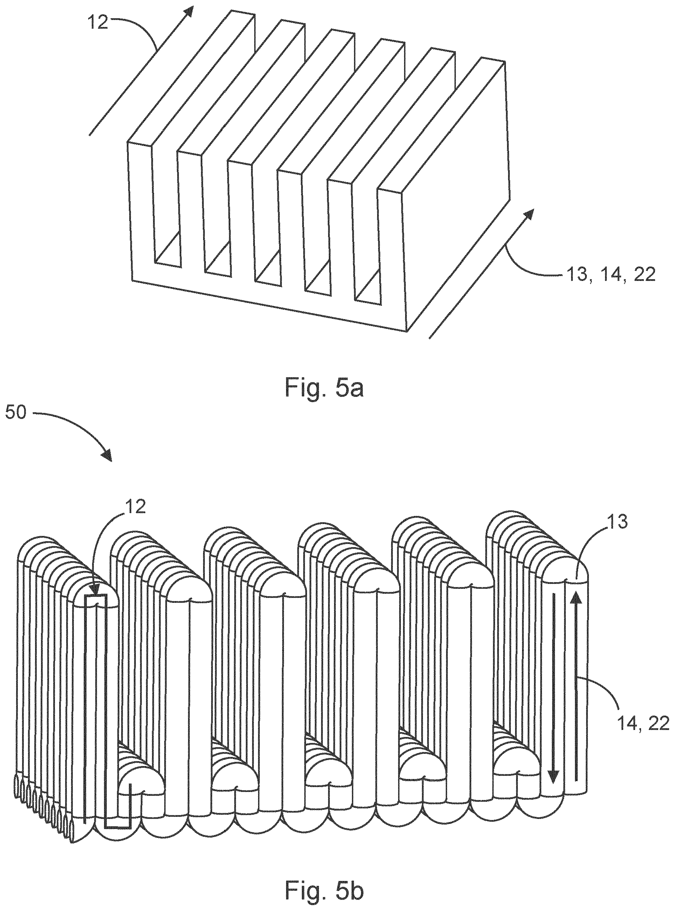

Fig. 5a illustrates a schematic heat and material flow direction in an electrical component known in the prior art which could for example a radiator. The arrow 12 shows the printing path or the extrusion direction and positioned in parallel direction to the arrow 12, the arrow 13, 14, 22 shows the material flow direction, the heat flow direction and the best thermal conducivity direction. In this embodiment, the size of a surface of transporting the heat is not optimal.

Fig. 5b illustrates a schematic heat and material flow direction in an electrical component 50 of the present invention that is improved in terms of thermal conductivity and surface size for transporting the heat flow compared to the electrical component of Fig. 5a.

The arrow 12 indicates the printing path. The arrow 13, 14, 22 indicate the directions of the thermally conductive thermoplastic material, the the heat flow of the thermally conductive thermoplastic material and the best direction for thermal conductivity. A further benefit of the electrical component 50 is the increased surface area that can improve the cooling of the electrical component 50. The electrical component 50 depicts the same thermal principle as shown in the embodiment of Fig. 3b or 3c. Of course, the orientation of the plurality of thermal-conductive layer elements with their snake-like shape and that are thermally and physically connected to each other is now different compared the electrical component as shown in Fig. 3b or 3c.

### REFERENCE SIGNS

- 10: Thermally conductive thermoplastic material
- 12: Printing path
- 13: Flow direction of the thermally conductive thermoplastic material
- 14: Direction of the heat flow of the thermally conductive thermoplastic material
- 16: Filler material element
- 18: Direction of the filler material element
- 22: Direction of best thermal conductivity
- 23: Direction of good thermal conductivity
- 24: Direction of worst thermal conductivity
- 32: Layer element
- 20, 30, 40, 50: Electrical component

- 100: Method
- 101: Step of providing a thermally conductive thermoplastic material
- 102: Step of processing the thermally conductive thermoplastic material

## Claims

**1.** Method (100) for manufacturing of a thermally conductive electrical component (20) comprising:
- providing (101) a thermally conductive thermoplastic material (10);
- processing (102) the thermally conductive thermoplastic material (10) by applying an extrusion-based 3D printing process to the thermally conductive thermoplastic material (10), wherein the step of processing (102) includes setting a printing path (12) of the thermally conductive thermoplastic material (10) during the 3D printing process in such a way that a flow direction (13) of the thermally conductive thermoplastic material (10) corresponds to a preferred direction (14) of a heat flow of the thermally conductive electrical component (20).

**2.** Method (100) according to claim 1, wherein the flow direction (13) of the thermally conductive thermoplastic material (10) extends in a radially-oriented direction.

**3.** Method (100) according to any of the claims 1 to 2, wherein the thermally conductive thermoplastic material (10) comprises a filler material element (16) that is oriented in the flow direction (13) of the thermally conductive material (10).

**4.** Method (100) according to claim 3, wherein a direction (18) of a largest dimension of the filler material element (16) located inside of the thermoplastic material (10) corresponds mainly to the flow direction (13) of the thermally conductive thermoplastic material (10).

**5.** Method (100) according to claim 3, wherein the at least one filler material element (16) comprises one of a plate,-needle-, or fiber-like shape.

**6.** Method (100) according to any of the proceeding claims, wherein the extrusion-based 3D printing process comprises pellet extrusion 3D printing or a fused deposition modelling method.

**7.** Electrical component (20) processed according to any of the claims 1 to 6, wherein the electrical component (20) is configured as a thermally conductive bobbin.

**8.** Electricial component (20) according to any of the claims 1 to 6, wherein the electrical component (20) comprises a thermally conductive electric insulation.

**10.** Electrical component (20) according to claims 1 to 6, wherein the electrical component (20) is a thermally conductive power electronic enclosure.

**11.** Electrical device (30) comprising an electrical component (20) according to any of the claims 7 to 10.

**12.** High power transformer comprising at least one electrical component (20) according to any of the claims 7 to 10.

**13.** 3D-printed structure manufactured according to any of the claims 1 to 6, comprising at least a layer (32) of a filler material element (16) according to claims 3 to 5.
